# EUROPÄISCHE PATENTSCHRIFT

(11) **EP 0 783 426 B1**
(45) Veröffentlichungstag und Bekanntmachung des Hinweises auf die Patenterteilung: **31.03.1999**
(21) Anmeldenummer: 95935364.0
(22) Anmeldetag: 24.10.1995
(51) Int. Cl.: B62D 65/00, B62D 25/08

(54) **VERFAHREN ZUR HERSTELLUNG EINES KRAFTFAHRZEUGS**
PROCESS FOR BUILDING A MOTOR VEHICLE
PROCEDE DE FABRICATION D'UN VEHICULE AUTOMOBILE

(30) Priorität: 26.10.1994 DE 4438214
(43) Veröffentlichungstag der Anmeldung: 16.07.1997
(73) Patentinhaber: Basler, Norbert, 38154 Königslutter (DE)
(72) Erfinder: Basler, Norbert, 38154 Königslutter (DE)
(74) Vertreter: Rehmann, Klaus-Thorsten, Dipl.-Ing.
(86) Internationale Anmeldenummer: DE9501494
(87) Internationale Veröffentlichungsnummer: WO9613421

(56) Entgegenhaltungen:
- EP-A- 0 127 225
- EP-A- 0 171 576
- EP-A- 0 584 576
- FR-A- 2 618 746

## Beschreibung

Die Erfindung betrifft ein Verfahren zur Herstellung eines Kraftfahrzeugs mit selbsttragender Karosserie, bei dem die Rohkarosse in zwei Hauptkarossen (Vorderbau, Hinterbau) vormontiert wird, voneinander unabhängig die Hauptkarossen (Vorderbau, Hinterbau) mit den ihnen zugeordneten Bauelementen bestückt werden und die Hauptkarossen (Vorderbau, Hinterbau) zusammengeführt und starr miteinander verbunden werden, nachdem sie weitestgehend komplettiert wurden, wobei in die eine Hauptkarosse (Vorderbau) die Technik bestimmenden Komponenten (Motor, Getriebe, Nebenaggregate und dergleichen) und in die andere Hauptkarosse (Hinterbau) im wesentlichen die Ausstattung bestimmenden Komponenten (Sitze, Verkleidungen, Teppich und der gleichen) eingebaut werden.

Ein solches Verfahren ist aus der EP-A-0 584 576 bekannt. Prinzipiell lassen sich Kraftfahrzeuge - in Grenzbetrachtung - ganz aus Einzelteilen erstellen oder aus vorgefertigten Teilen zusammensetzen. Die heute übliche Bauweise, die Herstellung von Kraftfahrzeugen, ist ein Mischsystem.

Bauteile und Baugruppen unterschiedlicher Vorfertigungsgrade werden in geöffnete, fertig lackierte Karosserien eingebracht. Hieran ist nachteilig, daß empfindliche, fertig lackierte Karosserien durch die vielfältigen und tiefgreifenden Montagearbeiten gefährdet sind. Beschädigungen an der Außenhaut bei der Montage bedürfen der kostenaufwendigen Nachbearbeitung nach der Endmontage. Die Zuführung und Montage größerer Teile ist kompliziert und muß, da sie vielfach nur schwer automatisierbar ist, als unphysiologische Handarbeit ausgeführt werden. Die Montage kleinerer Teile erhöht die Zahl der Montagevorgänge vor Ort, führt zu gegenseitigen Behinderungen des Montagepersonals und verlängert die Montagezeit. Standardisierung und Modellflexibilität sind nur schwer miteinander vereinbar.

Es ist auch bekannt, daß sich wirtschaftliche Vorteile erzielen lassen, wenn bei der Herstellung komplexer technischer Produkte möglichst wenige, vormontierte Baugruppen Verwendung finden. Deshalb gehen neuere Fertigungskonzepte davon aus, ein Fahrzeug in möglichst großen Einzelmodulen vorzufertigen. Die Einzelmodule können getrennt komplettiert werden. Sie werden, nachdem sie gegebenenfalls an getrennten Fertigungsplätzen erzeugt worden sind an das Fließband zu Endmontage des Fahrzeugs herangeführt.

In dem Lehrbuch von Horst Pippert "Karosserietechnik", 2. Auflage, Würzburg: Vogel Buchverlag 1993 sind verschiedene Modulbauweisen offenbart, die die Montage von Kraftfahrzeugen rationalisieren können.

Bei der Fahrschemelbauweise nehmen die Fahrschemel sowohl das Fahrwerk als auch den Antrieb auf. Sie werden mit diesen Aggregaten vormontiert und über Silentblöcke an die selbsttragende Karosserie angeschraubt.

Ebenso ist es beispielsweise bekannt, die gesamte Stirnwand einschließlich des Cockpits und der Pedale als ein Modul in den vorderen Karosserieausschnitt der Rohkarosse einzusetzen und mit der Bodengruppe zu verkleben bzw. zu verschrauben.

In einem anderen Ausführungsbeispiel kann das Bodenelement als Modul mit fertig montierten Cockpit, Pedalträgern und Sitzen in die Karosserieträgerstruktur von unten eingesetzt und verklebt werden.

Ebenfalls ist bekannt, den Frontbereich, die Dach- und Bodengruppe zu trennen. Durch diese horizontale Fahrzeugtrennung kann vor dem endgültigen Zusammenbau die Bodengruppe einfach bestückt und insbesondere der Antriebsblock leicht montiert werden.

Eine Trennung in Vorder- und Hinterwagen führt zu einer vertikal geteilten Karosserie. Hierbei wird eine geschlossene, steife Fahrgastzelle in Wagenmitte mit getrennt erstellten Vorderwagen und Hinterwagen in Stahl-Rahmen-Bauweise verbunden.

Allen unterschiedlichen Methoden liegt das Problem zugrunde, die Vorfertigung möglichst größerer Einheiten zu erreichen. Sie haben aber alle mehr oder weniger den Nachteil, daß sie meist nur eine Forderung, beispielsweise die Montagefreundlichkeit optimieren, hierfür aber tiefergreifende strukturelle Änderungen erfordern oder Designänderungen bedürfen.

Häufig muß dabei auch die kostengünstige Bauweise der selbsttragenden Karosserie aus Pressteilen verlassen werden oder der Einsatz neuer Werkstoffe wird zwingend, ohne dabei ein überzeugendes Maß an Vorteilen zu erlangen.

Die WO 92/07749 offenbart ein Montageverfahren für ein Kraftfahrzeug, bei dem ein Fahrzeugvorderbau nach der Komplettierung mit einem komplettierten Fahrzeughinterbau verbunden wird. Die Trennlinie der Karosserie verläuft mittig über den Dachbereich. An dem bekannten Verfahren ist nachteilig, daß die Verbindung der beiden Hauptkarossen aufgrund der geforderten Stabilität äußerst kompliziert ist. Bei einer selbsttragenden Karosserie übernimmt der Dachbereich tragende Funktion. Wenn der Vorbau mit dem Hinterbau im Dachbereich mittig verbunden wird, kann das an sich recht dünne Blech keine tragende Funktion übernehmen, so daß die ebenfalls geteilte Bodengruppe entsprechend verstärkt werden muß. Eine solche Verstärkung führt zu einer deutlichen Gewichtserhöhung.

Die JP-A-6-8851 offenbart ein Konzept, bei dem die Karosserie nicht äquatorial getrennt ist, sondern das Fahrzeug besteht aus mehreren Komponenten. Die Bodengruppe besteht ebenso wie die Karosserie, die auf die Bodengruppe aufgesetzt wird, aus zwei Teilen. Die hierin offenbarte Bauweise ist skelettbetont und steht der Rahmenbauweise früherer Autoepochen sehr nahe. Sie läßt die Notwendigkeit kräftiger Profil- und Hilfsrahmen erkennen.

Ausgehend von dieser Problematik liegt der Erfindung die Aufgabe zugrunde, ein gattungsgemäßes Verfahren zur Herstellung eines Kraftfahrzeugs fortzubilden, das eine kostengünstige Segmentbauweise gestattet und bei dem der Bau der einzelnen Segmente weitestgehend mit herkömmlichen Materialien, Werkzeugen und Verfahren möglich ist.

Die Lösung der Aufgabe erfolgt dadurch, daß die Trennlinie zwischen den beiden Hauptkarossen (Vorderbau, Hinterbau) in Höhe der A-Säule verläuft, wobei die obere Verbindungsstelle am Rahmen der Windschutzscheibe und die untere Verbindung zwischen der A- und der B-Säule vorgesehen ist, vor der Zusammenführung die die Technik bestimmenden Komponenten aufweisende Hauptkarosse (Vorderbau) in einer Einheitsfarbe und die andere Hauptkarosse (Hinterbau) in der gewünschten Endfarbe lackiert wird, wobei die Einheitsfarbe der Hauptkarosse später nicht mehr überlackiert wird und nach dem Verbinden der Hauptkarossen (Vorderbau, Hinterbau) miteinander an der einen Hauptkarosse (Vorderbau) die jeweils in der Endfarbe lackierten Finish-Teile, nämlich Kotflügel, die Motorhaube, die Türen und weitere Außenverkleidungsteile (Stoßstange, Kühlergrill) befestigt werden.

Hierdurch ist eine Vorfertigung in nur zwei Hauptteilen bzw. Hauptgruppen möglich. Vorhandene Fertigungseinrichtungen und Montageverfahren können bei der Herstellung und Komplettierung von Vorderbau und Hinterbau weitgehend beibehalten werden. Hierzu können die traditionellen Materialien weiter verwendet werden und es sind keine Designänderungen erforderlich. Vorderbau und Hinterbau können an verschiedenen Orten montiert werden. Zur Hochzeit werden sie an einem gemeinsamen Ort nur noch zusammengeführt und miteinander vernietet, verklebt, verschraubt oder verschweißt. Die Karosserie ist weiterhin selbsttragend.

Die Kosten, die mit dem Angebot unterschiedlicher Modellvarianten verbunden sind, werden deutlich reduziert, weil in aller Regel die technischen Varianten sich im wesentlichen auf eine unterschiedliche Motorisierung beschränken, während die Ausstattung, das Interieur und sonstiges Zubehör, eine weit höhere Variantenvielfalt bringen. Durch eine bis zur Hochzeit mögliche, weitgehend freie Kombinierbarkeit der einzelnen Varianten, ist eine weitere Flexibilität gegeben.

Außerdem ist sichergestellt, daß der Windschutzscheibenrahmen vollständig an einer der Hauptkarossen vorgesehen ist. Hierdurch ist eine Verwindung während des Betriebes des Fahrzeuges ausgeschlossen und die Windschutzscheibe kann nicht platzen.

Besonders vorteilhaft ist es, wenn erst nach dem Verbinden der Hauptkarossen miteinander am Vorderbau die Kotflügel, die Motorhaube, die Türen und weitere Außenverkleidungsteile wie Stoßstange, Kühlergrill und dergleichen befestigt werden. Damit sind alle oberflächensensiblen Bauteile bei der Montage des Vorderwagens nicht vorhanden. Bei der Montage des Antriebs- und Getriebeblockes mit den wichtigen Nebenagregaten sowie dem Einbau des Cockpits und der Pedalerie in den Vorderwagen können diese deshalb auch nicht beschädigt werden.

Außerdem kann der Vorderwagen für alle Modellvarianten mit einem Einheitslack lackiert werden, der nach der Montage der Außenhautteile von diesen überdeckt und dadurch unsichtbar wird. Durch die Forderung nach möglichst guter Aerodynamik eines heutigen Kraftfahrzeugs wird diese Variante noch begünstigt, weil die Motorhaube den unteren Rahmen der Windschutzscheibe möglichst überdecken soll, um hierin beispielsweise die Scheibenwischer strömungsgünstig zu versenken, und die A-Säule von der bündig eingeklebten Windschutzscheibe bzw. dem Türrahmen abgedeckt wird. Dies bietet bisher nicht gekannte Vorteile bei der Wahl von Produktionsstandorten, Marktflexibilität, Logistik und Reparaturen.

Weiterhin vorteilhaft ist es, wenn hierzu die nachträglich an dem Vorderbau zu befestigenden, in Wagenfarbe lackierten Bauteile zusammen mit dem Hinterbau - gegebenenfalls mitlaufend - lackiert werden. Dadurch ist sichergestellt, daß an dem fertiggestellten Fahrzeug keine Unterschiede in der Farbnuance erkennbar sind.

Grundsätzlich können die Hauptkarossen in Höhe der A-Säule miteinander verbunden werden, wobei die Verbindungsstellen am Rahmen der Windschutzscheibe und der Bodengruppe etwa in Höhe des oberen Endes der A-Säule vorgesehen werden. Der Rahmen für die Windschutzscheibe kann dabei entweder am Vorderbau, so daß die A-Säule zum Vorderbau gehörig ist, oder am Hinterbau, so daß sie zum Hinterbau gehörig ist, angeordnet sein. Die Anordnung des Windschutzscheibenrahmens am Vorderbau hat den Vorteil, daß der Hinterbau zum Montieren des Interieurs eine größere Öffnung aufweist.

Eine Trennung der Hauptkarossen unterhalb der Windschutzscheibe erlaubt eine höhere Gestaltungsfreiheit für das Karosseriesegment, so ist es beispielsweise möglich neben einer Limousine auch eine Coupé-Version mit demselben Vorderbau zu verbinden.

In einem weiteren Ausführungsbeispiel kann der Vorderbau die gesamte Bodengruppe, also den Wagenboden mit dem Fahrgestell umfassen, wodurch auch bei standardgetriebenen Fahrzeugen (Frontmotor/Heckantrieb) gestattet wird, die erfindungsgemäßen Vorteile zu nutzen. Mit der Erfindung ist es möglich, neue Formen der Standardisierung zu erreichen und damit die Logistik in der Herstellung, Nutzung und Entsorgung, bei der Reparatur und das Recycling zu verbessern. Die Kombination der einzelnen Vorteile bietet dabei einen zusätzlichen und entscheidenden Synergieefekt gegenüber traditionellen Bauweisen. Links- und Rechtslenker-Versionen der Fahrzeuge sind einfach realisierbar.

Durch die weiträumige Öffnung des Karosseriehohlkörpers nahe des Äquators können bis zur Endmontage in beiden Segmenten (Hauptkarossen) gleichzeitig und einfach Teile zugeführt und montiert werden.

Anhand einer Zeichnung soll die Erfindung nachfolgend näher erläutert werden. Es zeigt:
- Fig. 1 -: die perspektivische Darstellung von Vorderwagen und Hinterwagen,
- Fig. 2 -: die Außenverkleidungsteile für den Vorderwagen,

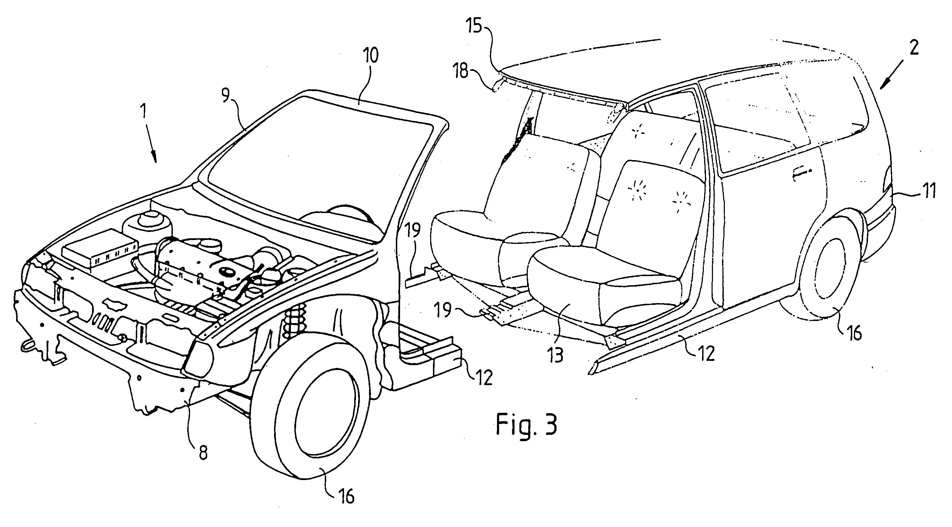

- Fig. 3 -: die Darstellung gemäß Fig. 1 mit einem abgewandelten Hinterbau,
- Fig. 4 -: die perspektivische Darstellung eines Ausführungsbeispieles der Erfindung,
- Fig. 5 -: die Teildarstellung der A-Säule eines strömungstechnisch optimierten heutigen Fahrzeuges mit den daran anstoßenden Bauteilen.

Die Rohkarosse wird erfindungsgemäß in zwei Hauptkarossen, den Vorderbau 1 und den Hinterbau 2 vormontiert. In dem Vorderbau 1 sind die im wesentlichen die Technik des Fahrzeugs bestimmenden Baugruppen untergebracht. Diese Baugruppen sind beispielsweise der Motor 14, das hier nicht dargestellte Getriebe sowie ebenfalls nicht dargestellte Nebenaggregate wie Klimaanlage, Lichtmaschine, Kühler usw. Außerdem ist im Vordervagen das Cockpit 17 mit den hier nicht dargestellten Bedienelementen untergebracht.

Der Vorderwagen 1 wird begrenzt durch den Karosseriebug 8, also das vordere Ende des späteren Kraftfahrzeugs und der A-Säule 9, die mit dem Rahmen 10 für die Windschutzscheibe 20 abschließt. Die zum Vordervagen 1 gehörende Bodengruppe 12 endet etwa in Höhe des oberen Endes der A-Säule 9 (auf einer Lotrechten darunter). Der Vorderbau 1 ist aus einem die Festigkeit und das Kollisionsverhalten des Fahrzeugs bestimmenden Aufbau gebildet, der nicht in der späteren Wagenfarbe, sondern in einem Einheitslack lackiert angeliefert wird, bevor die Aggregate in den Vorderbau 1 integriert werden. Die große Öffnung im Äquator der Rohkarosse gestattet einen einfachen Einbau des Cockpits 17 von vorne sowie einen einfachen Einbau des Motors 14 und der Nebenagregate in den Motorraum von oben und eine Montage der Achse oder bei einem Fronttriebler des kompletten Antriebs von unten. Nachdem der Vorderbau 1 mit den notwendigen Bauteilen komplettiert wurde, wird dieser zur Hochzeit mit dem Hinterbau 2 zu dem dafür vorgesehenen Montageplatz transportiert.

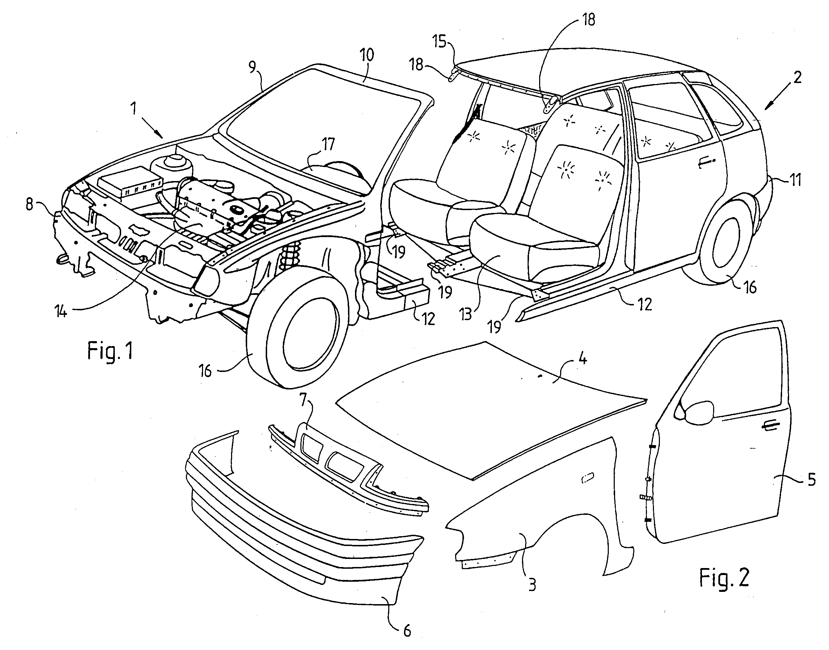

Der Hinterbau 2 wird begrenzt durch das Karosserieheck 11 und dem Dachansatz zur A-Säule 9. Wie Fig. 1 zeigt, kann der Hinterbau 2 von vorne mit dem Interieur, den Sitzen 13 dem nicht- bezeichneten Dachhimmel, den Seitenverkleidungen, den nichtbezeichneten Sicherheitsgurten und dem Teppichboden komplettiert werden. Nachdem alle die Ausstattung bestimmenden Komponenten im Hinterbau 2 montiert wurden, kann dieser mit den hier nicht näher bezeichneten hinteren Türen, dem Kofferraumdeckel bzw. der Heckklappe komplettiert werden und dann zur Hochzeit dem Vorderbau 1 zugeführt werden.

Die starre Verbindung von Vorderbau 1 und Hinterbau 2 miteinander erfolgt durch geeignete Maßnahmen, in den Figuren sind hierzu vereinfachte Befestigungsstellen 18 am Dach und 19 an der Bodengruppe 12 angegeben. Die Verbindung kann durch Nieten, Schrauben, Schweißen oder Kleben erfolgen. Dem Fachmann sind geeignete Maßnahmen hierzu geläufig.

Nach dem Zusammenbau von Vorderbau 1 und Hinterbau 2, der Hochzeit, wird der im Einheitslack lackierte Vorderbau 1, der jetzige Vorderwagen, mit den das Finish bildenden, parallel zum Hinterbau lackierten und bereits in Wagenfarbe angelieferten Anbauteilen, nämlich die Kotflügel 3, die Motorhaube 4, die vorderen Türen 5, die Stoßstange 6 und der Kühlergrill 7 verbunden. Diese Verbindung kann ebenfalls durch Nieten, Schrauben oder Kleben erfolgen. Von den Anbauteilen nicht abgedeckte, noch im einheitlichen Grundlack sichtbare Teile des Vorderwagens 1, insbesondere im Inneren des Fahrzeugs, können durch weiche Abdeckteile verkleidet werden.

Entweder werden die Räder 16 als letztes an das fertige Kraftfahrzeug montiert oder sie werden bereits bei der Montage der beiden Hauptkarossen angebracht. Selbstverständlich muß das Fahrzeug auch durch weitere Bauelemente wie Kraftstoff- und Bremsleitungen sowie Elektrik-Verbindungen usw. komplettiert werden.

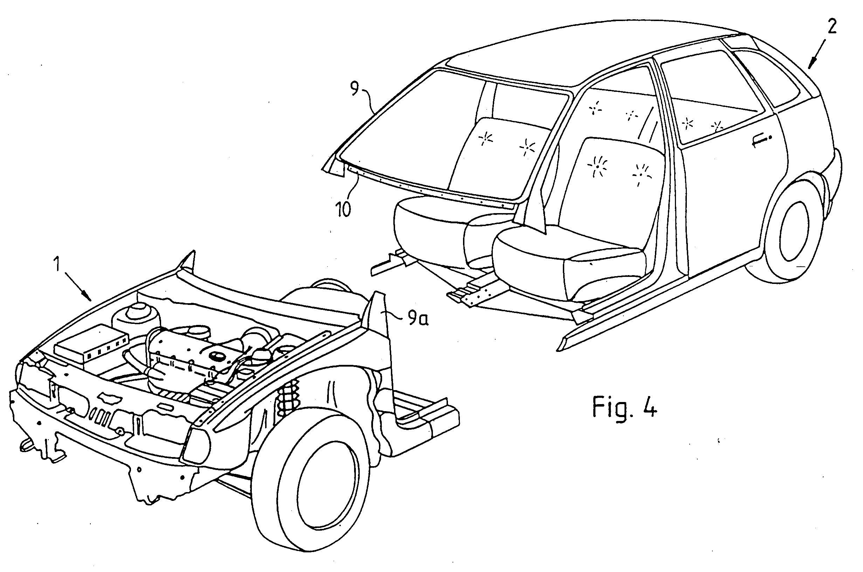

Fig. 4 zeigt eine Ausführungsvariante von Vorderbau 1 und Hinterbau 2. Der Rahmen 10 der Windschutzscheibe 20 und damit die A-Säule 9 ist dem Hinterbau 2 zugeordnet. Der Vorderbau 1 endet damit am unteren Ende 9a der A-Säule 9. Über dieses Ende 9a und die A-Säule 9 werden der Vorderbau 1 und der Hinterbau 2 später verbunden. Diese Ausbildungsform bietet den Vorteil, daß die Karosserievarianz erhöht wird, ohne den Vorderbau 1 davon zu beeinflussen.

In einem weiteren, nicht dargestellten Ausführungsbeispiel ist es möglich, die Bodengruppe 12 vollständig dem Vorderbau 1 zuzuordnen. Wenn der Hinterbau 2 dennoch mit einem Bodenblech versehen wird und die Bodengruppe 12 nur einen Fahrgestellrahmen bildet, können die erfindungsgemäßen Vorteile auch bei Fahrzeugen mit Frontmotor und Heckantrieb realisiert werden.

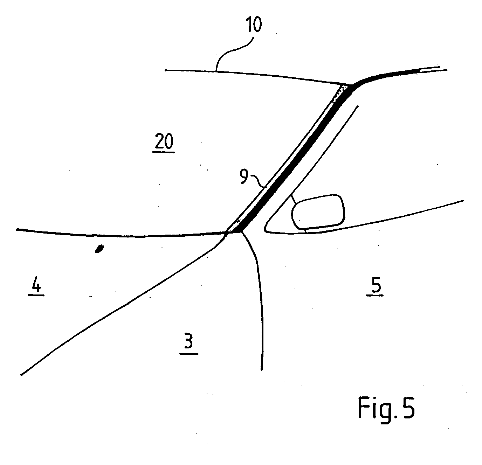

Wie der Fig. 5 entnehmbar ist, wird die A-Säule 9 bei strömungsoptimierten Fahrzeugen durch den Rahmen der vorderen Tür 5 sowie die bündig eingeklebte Windschutzscheibe 20 völlig abgedeckt. Die weit über das untere Ende der Windschutzscheibe 20 hinüberreichende Motorhaube 4 deckt den unteren Bereich des Fensterrahmens ab.

## Patentansprüche

1. Verfahren zur Herstellung eines Kraftfahrzeugs mit selbstragender Karosserie, bei dem
- die Rohkarosse in zwei Hauptkarossen (Vorderbau (1), Hinterbau (2)) vormontiert wird,
- voneinander unabhängig die Hauptkarossen (Vorderbau (1), Hinterbau (2)) mit den ihnen zugeordneten Bauelementen bestückt werden und
- die Hauptkarossen (Vorderbau (1), Hinterbau (2)) zusammengeführt und starr miteinander verbunden werden, nachdem sie weitestgehend komplettiert wurden, wobei
- in die eine Hauptkarosse (Vorderbau (1)) die technikbestimmenden Komponenten (Motor, Getriebe, Nebenaggregate und dergleichen) und
- in die andere Hauptkarosse (Hinterbau (2)) im wesentlichen die ausstattungsbestimmenden Komponenten (Sitze, Verkleidungen, Teppich und dergleichen) eingebaut werden,
**dadurch gekennzeichnet, daß**
- die Trennlinie zwischen den beiden Hauptkarossen (Vorderbau (1), Hinterbau (2)) in Höhe der A-Säule (9) verläuft, wobei die obere Verbindungsstelle am Rahmen (10) der Windschutzscheibe (18) und die untere Verbindung zwischen der A- und der B-Säule vorgesehen ist,
- vor der Zusammenführung die die Technik bestimmenden Komponenten aufweisende Hauptkarosse (Vorderbau (1)) in einer Einheitsfarbe und die andere Hauptkarosse (Hinterbau (2)) in der gewünschten Endfarbe lackiert wird, wobei die Einheitsfarbe der Hauptkarosse später nicht mehr überlackiert wird und
- nach dem Verbinden der Hauptkarossen (Vorderbau (1), Hinterbau (2)) miteinander an der einen Hauptkarosse (Vorderbau (1)) die jeweils in der Endfarbe lackierten Finish-Teile, nämlich Kotflügel (3), die Motorhaube (4), die Türen (5) und weitere Außenverkleidungsteile (Stoßstange (6), Kühlergrill (7) und dergleichen) befestigt werden.

2. Verfahren nach Anspruch 1, **dadurch gekennzeichnet**, daß die Verbindung der Hauptkarossen (Vorderbau (1), Hinterbau (2)) in der Bodengruppe (12) in Höhe des oberen Endes der A-Säule (9) vorgesehen wird.

3. Verfahren nach Anspruch 2, **dadurch gekennzeichnet, daß** der am Vorderbau (1) vorgesehene Rahmen (10) mit dem Hinterbau (2) verbunden wird.

4. Verfahren nach Anspruch 2, **dadurch gekennzeichnet, daß** der am Hinterbau (2) vorgesehene Rahmen (10) mit dem Vorderbau (1) verbunden wird.

5. Verfahren nach einem oder mehreren der vorstehenden Ansprüche, **dadurch gekennzeichnet, daß** die Verbindung von Vorderbau (1) und Hinterbau (2) durch Nieten, Schrauben, Schweißen oder Kleben erfolgt.

6. Verfahren nach einem der vorstehenden Ansprüche, **dadurch gekennzeichnet, daß** die mit der einen Hauptkarosse (Vorderbau (1)) zu befestigenden, in Wagenfarbe lackierten Bauteile zusammen mit der zugehörigen anderen Hauptkarosse (Hinterbau (2)) lackiert werden.

7. Rohkarosse zur Verwendung bei der Herstellung eines Kraftfahrzeuges, bestehend aus einem Vorderbau (1) und einem Hinterbau (2), als getrennte Einheiten, wobei der Vorderbau (1) überwiegend die die Technik bestimmenden Komponenten (Motor, Getriebe, Nebenaggregate und dergleichen) und der Hinterbau (2) überwiegend die die Ausstattung bestimmenden Komponenten (Sitze, Verkleidung, Teppiche und dergleichen) aufweist, **dadurch gekennzeichnet, daß** der Vorderbau (1) begrenzt wird vom Karosseriebug (8) und dem Rahmen (10) der Windschutzscheibe (18) an der A-Säule (9) und der Hinterbau (2) begrenzt wird vom Karosserieheck (11) und dem Dachansatz (15) zur A-Säule (9), daß der Hinterbau (2) die vorgesehene Endlackierung und der Vorderbau (1) eine davon abweichende, nicht mehr zur Veränderung vorgesehene Lackierung aufweist.

8. Rohkarosse zur Verwendung bei der Herstellung eines Kraftfahrzeuges, bestehend aus einem Vorderbau (1) und einem Hinterbau (2), als getrennte Einheiten, wobei der Vorderbau (1) überwiegend die die Technik bestimmenden Komponenten (Motor, Getriebe, Nebenaggregate und dergleichen) und der Hinterbau (2) überwiegend die die Ausstattung bestimmenden Komponenten (Sitze, Verkleidung, Teppiche und dergleichen) aufweist, **dadurch gekennzeichnet, daß** der Vorderbau (1) begrenzt wird vom Karosseriebug (8) und dem unteren Ansatz (9a) der A-Säule (9) und der Hinterbau (2) begrenzt wird vom Karosserieheck (11) und dem Rahmen (10) der Windschutzscheibe (18) an der A-Säule (9), daß der Hinterbau (2) die vorgesehene Endlackierung und der Vorderbau (1) eine davon abweichende, nicht mehr zur Veränderung vorgesehene Lackierung aufweist.

9. Rohkarosse nach Anspruch 7 oder 8, **dadurch gekennzeichnet, daß** der Vorderbau (1) die vollständige Bodengruppe (12) umfaßt.

## Claims

1. A method of manufacturing a vehicle, wherein
- the semifinished body is pre-assembled in two main parts (front structure (1), rear structure (2)),
- the main body parts (front structure (1), rear structure (2)) are independently equipped with the associated components and
- the main body parts (front structure (1), rear structure (2)) are brought together and rigidly connected after being substantially completed, wherein
- the engineering components (engine, transmission, subsidiary units and the like) are incorporated in one main body part (front structure (1)) and
- the mainly decorative components (seats, coverings, carpet and the like) are incorporated in the other main body part (rear structure (2)),
**characterised in that**
- the parting line between the two main body parts (front structure (1), rear structure (2)) extends at the level of the A-column (9), the upper connecting place being provided on the frame (10) of the windscreen (18) and the lower connection being provided between the A- column and the B-column,
- before assembly, the main body part comprising the engineering components (front structure (1)) is lacquered in a standard colour and the other main body part (rear structure (2)) is lacquered in the required final colour, the standard colour of the main body part not being subsequently lacquered over, and
- after the main body parts (front structure (1), rear structure (2)) have been connected together the finished parts lacquered in the final colour, namely the mudguard (3), the engine bonnet (4), the doors (5) and other outer covering parts (bumper (6), radiator grille (7) and the like) are secured to one main body part (front structure (1)).

2. A method according to claim 1, **characterized in that** the connection between the main body parts (front structure (1), rear structure (2)) is provided in the floor group (12) at the level of the upper end of the A-column (9).

3. A method according to claim 2, **characterized in that** the frame (10) provided on the front structure (1) is connected to the rear structure (2).

4. A method according to claim 2. **characterized in that** the frame (10) provided on the rear structure (2) is connected to the front structure (1).

5. A method according to one or more of the preceding claims, **characterised in that** the front structure (1) and rear structure (2) are connected by rivets, screwing, welding or sticking.

6. A method according to any one of the preceding claims, **characterized in that** the components painted in the colour of the vehicle and for fastening to one main part (front structure (1)) are painted together with the associated other main body part (rear structure (2)).

7. A semifinished body for use in the production of a motor vehicle, comprising a front structure (1) and a rear structure (2) as separate units, the front structure (1) mainly comprising the engineering components (engines, transmission, subsidiary units and the like) and the rear structure (2) mainly comprising the decorative components (seats, covering, carpets and the like), **characterised in that** the front structure (1) is bounded by the body nose (8) and the frame (10) of the windscreen (18) on the A-column (9) and the rear structure (2) is bounded by the body tail (11) and the roof attachment (15) to the A-column (9), and the rear structure (2) has the prescribed final lacquering and the front structure (1) has a different lacquering, not intended for alteration.

8. A semifinished body for use in the production of a motor vehicle, comprising a front structure (1) and a rear structure (2) as separate units, the front structure (1) mainly comprising the engineering components (engines. transmission. subsidiary units and the like) and the rear structure (2) mainly comprising the decorative components (seats, covering, carpets and the like), **characterized in that** the front structure (1) is bounded by the body nose (8) and the lower attachment (9a) of the A-column (9) and the rear structure (2) is bounded by the body tail (11) and the frame (10) of the windscreen (18) on the A-column (9), and the rear structure (2) has the prescribed final lacquering and the front structure (1) has a different lacquering, not intended for alteration.

9. A semifinished body according to claim 7 or claim 8, **characterised in that** the front structure (1) includes the complete floor group (12).

## Revendications

1. Procédé pour fabriquer un véhicule automobile à carrosserie autoportante, selon lequel
- la coque brute est pré-assemblée en deux coques principales (structure avant (1), structure arrière (2)),
- on équipe les coques principales (structure avant (1), structure arrière (2)) indépendamment l'une de l'autre, avec les éléments de construction qui leur sont affectés, et
- les coques principales (structure avant (1), structure arrière (2)) sont réunies et assemblées rigidement l'une à l'autre, après avoir été complétées le plus largement possible, procédé dans lequel
- on monte dans l'une des coques principales (structure avant (1)), les composants techniquement déterminants (moteur, boîte de vitesses, appareils auxiliaires et analogues), et,
- dans l'autre coque principale (structure arrière (2)), essentiellement les composants déterminants pour l'équipement (sièges, habillages, tapis et analogues),
caractérisé en ce que
- la ligne de joint entre les deux coques principales (structure avant (1), structure arrière (2)), s'étend à hauteur du montant antérieur (9), la zone d'assemblage supérieure étant prévue au niveau du cadre (10) du parebrise (18) et la zone d'assemblage inférieure entre le montant antérieur et le pied-milieu,
- avant la réunion, la coque principale (structure avant (1)) présentant les composants techniquement déterminants est peinte dans une teinte unifiée et l'autre coque principale (structure arrière (2)) dans la teinte définitive souhaitée, la teinte unifiée de la coque principale ne recevant plus d'autre couche de peinture par la suite ; et
- après l'assemblage mutuel des coques principales (structure avant (1), structure arrière (2)), on fixe sur l'une des coques principales (structure avant (1)), les pièces finies peintes chacune dans la teinte définitive, à savoir les ailes (3), le capot moteur (4), les portières (5) et d'autres pièces de garniture extérieure (pare-chocs (6), calandre de radiateur (7) et analogues).

2. Procédé selon la revendication 1, caractérisé en ce que l'assemblage des coques principales (structure avant (1), structure arrière (2)) dans la plateforme (12) est prévu au droit de l'extrémité supérieure du montant antérieur (9).

3. Procédé selon la revendication 2, caractérisé en ce qu'on assemble à la structure arrière (2) le cadre (10) prévu sur la structure avant (1).

4. Procédé selon la revendication 2, caractérisé en ce qu'on assemble à la structure avant (1) le cadre (10) prévu sur la structure arrière (2).

5. Procédé selon l'une ou plusieurs des revendications précédentes, caractérisé en ce que l'assemblage de la structure avant (1) à la structure arrière (2) s'effectue par rivetage, vissage, soudage ou collage.

6. Procédé selon l'une des revendications précédentes, caractérisé en ce que les pièces peintes dans la teinte du véhicule et devant être fixées à l'une des coques principales (structure avant (1)), sont peintes en commun avec l'autre coque principale correspondante (structure arrière (2)).

7. Coque brute destinée à être utilisée dans la fabrication d'un véhicule, constituée d'une structure avant (1) et d'une structure arrière (2), sous forme d'ensembles séparés, la structure avant (1) présentant de façon prépondérante les composants techniquement déterminants (moteur, boîte de vitesses, appareils auxiliaires et analogues) et la structure arrière (2) de façon prépondérante les composants déterminants pour l'équipement (sièges, habillages, tapis et analogues), caractérisée en ce que la structure avant (1) est délimitée par le bouclier avant de carrosserie (8) et le cadre (10) du pare-brise (18) adjacent au montant antérieur (9), et la structure arrière (2) est délimitée par l'arrière de carrosserie (11) et l'embout de toit (15) en direction du montant antérieur (9), et en ce que la structure arrière (2) présente la teinte définitive prévue et la structure avant (1) une teinte différente prévue pour ne plus être modifiée.

8. Coque brute destinée à être utilisée dans la fabrication d'un véhicule, constituée d'une structure avant (1) et d'une structure arrière (2), sous forme d'ensembles séparés, la structure avant (1) présentant de façon prépondérante les composants techniquement déterminants (moteur, boîte de vitesses, appareils auxiliaires et analogues) et la structure arrière (2) de façon prépondérante les composants déterminants pour l'équipement (sièges, habillages, tapis et analogues), caractérisée en ce que la structure avant (1) est délimitée par le bouclier avant de carrosserie (8) et l'embout inférieur (9a) du montant antérieur (9), et la structure arrière (2) est délimitée par l'arrière de carrosserie (11) et le cadre (10) du pare-brise (18) adjacent au montant antérieur (9), et en ce que la structure arrière (2) présente la teinte définitive prévue et la structure avant (1) une teinte différente prévue pour ne plus être modifiée.

9. Coque brute selon la revendication 7 ou 8, caractérisée en ce que la structure avant (1) englobe la plateforme (12) complète.
